# FASCICULE DE BREVET EUROPEEN

(11) **EP 1 936 722 B1**
(45) Date de publication et mention de la délivrance du brevet: **12.05.2010**
(21) Numéro de dépôt: 07354063.5
(22) Date de dépôt: 28.11.2007
(51) Int. Cl.: H01M 4/70, H01M 4/02, H01M 10/38

(54) **Accumulateur au lithium comprenant un ensemble collecteur de courant-électrode avec des cavités d'expansion et procédé de fabrication**
Lithium-Akku, der eine Stromkollektor-Elektroden-Anordung mit Expansionsräumen umfasst, und entsprechendes Herstellungsverfahren
Lithium accumulator comprising a current collector-electrode assembly with expansion cavities and method of manufacturing same

(30) Priorité: 21.12.2006 FR 0611184
(43) Date de publication de la demande: 25.06.2008
(73) Titulaire: Commissariat à l'Energie Atomique, 75015 Paris (FR)
(72) Inventeur: Salot, Raphaël, 38250 Lans en Vercors (FR); Gaillard, Frédéric, 38500 Voiron (FR); Bancel, Stéphane,, 69007 Lyon (FR)
(74) Mandataire: Hecké, Gérard

(56) Documents cités:
- EP-A- 1 501 136
- EP-A1- 0 872 902
- WO-A-2004/114437
- WO-A-2007/105196
- WO-A2-2005/076389
- FR-A1- 2 880 198

## Description

### Domaine technique de l'invention

L'invention concerne un accumulateur au lithium comportant au moins un électrolyte et un empilement comprenant une électrode, un collecteur de courant, comprenant une pluralité de zones en creux délimitées par des parois latérales comportant chacune une extrémité libre, et des cavités d'expansion pour l'électrode.

L'invention concerne également un procédé de fabrication d'un tel accumulateur.

### État de la technique

Les microbatteries sous forme de films minces reposent sur le principe d'insertion et de désinsertion (ou intercalation et désintercalation) d'un ion de métal alcalin ou d'un proton dans l'électrode positive. Les principaux systèmes connus sont des accumulateurs au lithium utilisant, comme espèce ionique, le cation Li+. Les composants de ces accumulateurs au lithium (collecteurs de courant, électrodes positive et négative et électrolyte) sont généralement sous forme d'un empilement de couches minces, d'une épaisseur totale d'environ 15 µm d'épaisseur. L'empilement est protégé de l'environnement extérieur et spécifiquement de l'humidité, par une ou plusieurs couches superposées d'encapsulation, par exemple en céramique, en polymère (hexaméthyldisiloxane, parylène) et/ou en métal.

Les couches minces de l'accumulateur au lithium sont généralement obtenues par dépôt physique en phase vapeur (PVD) ou dépôt chimique en phase vapeur (CVD). L'utilisation de telles techniques de dépôt, classiques dans le domaine de la microélectronique, permettent de réaliser des accumulateurs au lithium de tout type de surface et de forme.

Selon les matériaux utilisés pour former un accumulateur au lithium, la tension de fonctionnement dudit accumulateur est comprise entre 1V et 5 V et les capacités surfaciques sont de l'ordre de quelques dizaines à quelques centaines de µAh/cm².

Les collecteurs de courant sont généralement métalliques, par exemple, à base de platine, de chrome, d'or ou de titane.

L'électrode positive est, quant à elle, formée par un matériau apte à insérer et désinsérer le cation Li⁺. Elle est, par exemple, constituée par l'un des matériaux suivants : LiCoO₂, LiNiO₂, LiMn₂O₄, CuS, CuS₂, WO_{y}S_{z}, TiO_{y}S_{z} et V₂O₅. Selon le matériau choisi pour former l'électrode positive et notamment pour les oxydes lithiés, un recuit thermique peut être réalisé après le dépôt de la couche mince, pour augmenter la cristallisation de ladite couche et sa propriété d'insertion et de désinsertion des cations Li⁺.

Le matériau formant l'électrolyte doit être un matériau, bon conducteur ionique et isolant électronique. Les matériaux d'électrolyte, les plus généralement utilisés, sont les matériaux à base de phosphate, tels que le LiPON et le LiSiPON, car ils présentent des performances accrues.

D'une manière générale, les accumulateurs au lithium peuvent être classés en trois familles, selon la nature de l'électrode négative :
a) les accumulateurs au lithium de type Li-Métal, pour les accumulateurs comportant une électrode négative en lithium métallique déposé par évaporation thermique ou en un alliage métallique à base de lithium.
b) les accumulateurs de type Li-Ion, pour des accumulateurs comportant une électrode négative formée par un matériau d'insertion et de désinsertion du cation Li⁺, tel que SiTON, SnNₓ, lnNₓ, SnO₂....
c) les accumulateurs au lithium sans anode (également appelés « Li-free »), pour les accumulateurs au lithium fabriqués sans électrode négative. Dans ce cas, l'électrode négative se forme in situ, pendant la charge de l'accumulateur et grâce à la présence d'une couche métallique bloquant le lithium et disposée sur l'électrolyte. Dans ce cas, un dépôt de lithium métallique constituant l'anode se forme entre l'électrolyte et ladite couche métallique pendant la charge de l'accumulateur.

Ces trois familles d'accumulateurs au lithium présentent, cependant, chacune des inconvénients liés à la nature de leur électrode négative.

Ainsi, la valeur du point de fusion du lithium, égale à 181 °C, limite la température d'utilisation d'un accumulateur de type Li-Métal. Avec un tel accumulateur, il est, par exemple, impossible de réaliser un procédé de refusion, également connu sous le nom anglo-saxon de « solder re-flow process » et utilisé pour assembler des circuits intégrés. De plus, le lithium présente une forte réactivité à l'air, ce qui est pénalisant pour l'encapsulation et il nécessite d'être déposé par évaporation thermique, ce qui complique le procédé de fabrication des accumulateurs.

Dans le cas des accumulateurs de type Li-lon, les matériaux d'anode les plus performants tels que le silicium conduisent à des expansions volumiques importantes allant jusqu'à 300%. Or, ces expansions volumiques génèrent des contraintes sollicitant fortement l'électrolyte, ce qui peut conduire à des fissures et donc à des courts-circuits rendant l'accumulateur inutilisable. De tels phénomènes peuvent également se produire dans un accumulateur sans anode (« Li-Free »), car la formation de lithium sur la couche métallique bloquante entraîne des protubérances, provoquant également de fortes contraintes et une rupture potentielle de l'électrolyte.

Plus particulièrement, les problèmes de contraintes dans les accumulateurs de type Li-ion et les accumulateurs de type sans anode conduisent à des taux de courts-circuits de l'ordre de 90% après 1000 cycles de charge-décharge, comme le souligne le brevet US 6,770,176 B2. Pour remédier à cet inconvénient, le brevet US 6,770,176 B2 propose de limiter la diffusion éventuelle de fissures dans l'électrolyte en remplaçant la couche d'électrolyte unique par un empilement multicouches. L'empilement multicouches peut comporter une ou plusieurs couches intermédiaires en matériau conducteur d'ions Li⁺, disposées entre des couches électrolytiques, par exemple en LiPON vitreux ou en LiAlF₄ vitreux. Une telle solution n'est, cependant, pas satisfaisante, car elle multiplie le nombre de couches à déposer et le nombre de cibles à utiliser pour le dépôt de l'électrolyte. Elle augmente donc le coût du procédé de fabrication. De plus, la conductivité ionique d'un tel empilement multicouches est inférieure à celle d'une couche mince unique.

Pour éviter la perte inhérente de capacité des batteries de type Li-Ion et contourner les difficultés de fabrication d'une anode en lithium métallique, le brevet US 6,168,884 propose un accumulateur au lithium sans anode, particulier. L'accumulateur comporte, ainsi, un collecteur de courant anodique qui ne forme pas de composés intermétalliques avec le lithium et qui est disposé entre l'électrolyte et une couche supplémentaire, par exemple en LiPON, en nitrure d'aluminium ou en parylène®. Selon le brevet US 6,168,884, une telle structure empêcherait la formation d'un lithium habituellement de morphologie de surface floconneuse et maintiendrait une interface plate et lisse sur l'anode en lithium. Cependant, cette solution n'est pas satisfaisante, car, comme l'indique le brevet US 6,713,987, l'épaisseur de l'anode peut être non uniforme, ce qui génère des contraintes et conduit à des courts-circuits. De plus, le dépôt de la couche supplémentaire augmente le coût de l'accumulateur au lithium et réduit le facteur de densité énergétique de la batterie.

Pour maintenir l'intégrité structurelle de l'accumulateur au lithium sans anode, le brevet US6,713,987 propose, quant à lui, que le collecteur de courant anodique de l'accumulateur au lithium sans anode soit perméable aux ions Li⁺. Pendant la charge de l'accumulateur, le lithium se dépose alors sur la surface extérieure du colleteur de courant anodique, à l'opposé de l'électrolyte. Un tel arrangement impose, cependant, que l'accumulateur soit fabriqué dans un boîtier d'encapsulation pour protéger l'anode contre l'environnement extérieur. Or, la réalisation de l'accumulateur, avec son boîtier d'encapsulation, est compliquée. De plus, un tel accumulateur occupe un espace important et ne peut pas être combiné avec un circuit intégré par exemple.

Dans la demande internationale WO-A-2006/070158, l'anode d'une microbatterie au lithium est composée de nanotubes ou de nanofils en silicium, disposée sur un substrat collecteur de courant. L'anode comporte, ainsi, des vides formés par l'espacement entre les différents nanotubes ou nanofils, destinés à compenser le gonflement inhérent à la décharge de la batterie et à éviter les contraintes sur l'électrolyte. La fabrication d'une telle anode est, cependant, complexe à mettre en oeuvre. En effet, plusieurs étapes sont nécessaires pour la croissance des nanotubes ou des nanofils. De plus, cette croissance et notamment la hauteur et la perpendicularité des nanotubes ou des nanofils par rapport au substrat collecteur de courant ne sont pas toujours maîtrisées.

Dans la demande internationale WO-A-2005/076389, une batterie Li-Ion avec un électrolyte liquide utilise un substrat conducteur électriquement, comportant une pluralité de cavités dans lesquelles sont déposées des couches et en particulier l'anode. L'ensemble anodique formé par le substrat structuré et l'anode et un ensemble cathodique sont, ensuite, positionnés verticalement dans une enceinte et un électrolyte liquide ou en gel polymère est disposé entre les deux ensembles. Ainsi, l'électrolyte recouvre alors la totalité de l'anode contenue dans les cavités du substrat. L'électrolyte étant sous forme liquide ou de gel polymère, il suit les variations volumiques de l'anode disposée dans les cavités.

### Objet de l'invention

L'invention a pour but un accumulateur au lithium remédiant aux inconvénients de l'art antérieur et limitant en particulier les contraintes exercées sur l'électrolyte tout en étant performant et facile à mettre en oeuvre.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, schématiquement et en coupe, un premier mode de réalisation d'un ensemble selon l'invention.
- La figure 2 représente, schématiquement et en coupe partielle selon A-A, le collecteur de courant de l'ensemble selon la figure 1.
- Les figures 3 à 6 représentent schématiquement des variantes de collecteurs de courant.
- les figures 7 et 8 représentent, schématiquement et en coupe, un accumulateur au lithium comprenant l'ensemble selon la figure 1, respectivement en décharge et en charge.
- La figure 9 représente, schématiquement et en coupe, une variante de réalisation de l'ensemble selon la figure 1.
- La figure 10 représente, schématiquement et en coupe, un accumulateur au lithium comportant une autre variante d'un ensemble selon la figure 1.
- Les figures 11 et 12 représentent, schématiquement et en coupe, un second mode de réalisation d'un ensemble selon l'invention et sa variante.

### Description de modes particuliers de réalisation

Un accumulateur au lithium, et plus particulièrement un accumulateur de type Li-lon sous forme de couches minces, comporte au moins un électrolyte constitué par une membrane électrolytique, sous forme d'une couche mince solide. La membrane électrolytique est disposée sur un ensemble pour accumulateur au lithium comprenant un empilement formé par un collecteur de courant et une électrode.

L'électrode est une électrode formée par au moins un matériau, de préférence apte à insérer et désinsérer des ions Li⁺ et dont le volume augmente lorsque des ions Li⁺ sont insérés. L'électrode est avantageusement une électrode négative formée par au moins un matériau choisi, par exemple, parmi le silicium, l'aluminium, le germanium, l'étain et leurs composés. À titre exemple, dans certaines conditions de cyclage, l'expansion volumique de l'aluminium est de 238%, celle du silicium est de 323% et celle de l'étain est de 358%.

La variation volumique de l'électrode est compensée par le fait que l'empilement comporte des cavités d'expansion pour l'électrode. Chaque cavité d'expansion comporte au moins une paroi formée par une partie de l'électrode. Ainsi, le volume vide des cavités d'expansion peut être au moins partiellement rempli par une partie du matériau formant l'électrode, lors de l'insertion des cations Li⁺ dans le matériau d'électrode. La paroi de cavité formée par une partie de l'électrode permet en effet l'expansion du matériau d'électrode dans le volume de ladite cavité pendant l'insertion des cations Li⁺ et le retrait du matériau d'électrode depuis ladite cavité pendant la désinsertion des cations Li⁺.

Plus particulièrement, les cavités d'expansion pour l'électrode sont formées dans des zones en creux ménagées dans le collecteur de courant. Les zones en creux sont délimitées dans le collecteur de courant par des parois latérales comportant chacune une extrémité libre et l'électrode disposée sur le collecteur de courant comporte au moins une couche mince continue, recouvrant alors l'extrémité libre desdites parois latérales, pour que la couche mince continue de l'électrode forme au moins une paroi de chacune des cavités d'expansion.

Selon un premier mode de réalisation, les cavités d'expansion sont constituées par les zones en creux du collecteur de courant et la couche mince continue de l'électrode est disposée sur ledit collecteur de courant afin de couvrir lesdites zones en creux.

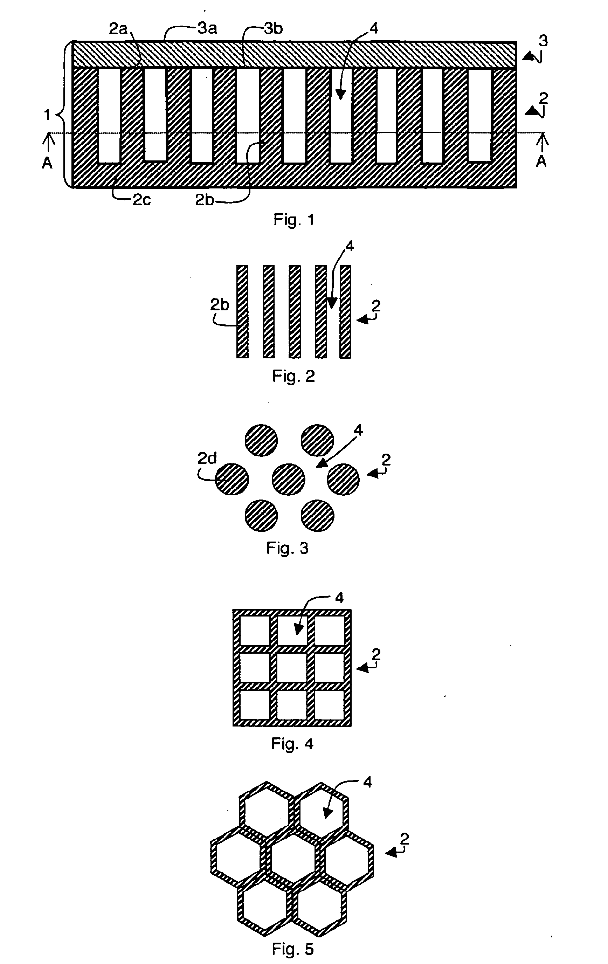

Ainsi, comme représenté sur les figures 1 et 2, un ensemble 1 pour accumulateur au lithium comporte un empilement de deux couches minces, formant respectivement le collecteur de courant 2 et l'électrode 3. L'électrode, constituée par la couche mince continue 3, comporte des première et seconde faces 3a et 3b opposées, planes et parallèles. La première face 3a est libre et elle est destinée à être en contact avec la membrane électrolytique. La seconde face 3b est en contact avec la surface 2a du collecteur de courant 2, dans laquelle sont réalisées les ouvertures ou les zones en creux 4 constituant les cavités d'expansion. Ainsi, la seconde face 3b de l'électrode 3 est disposée sur les extrémités libres des parois latérales délimitant les zones en creux dans le collecteur de courant 2.

Ainsi, les cavités d'expansion 4 sont formées dans le collecteur de courant 2 et elles s'étendent jusqu'à la surface 2a du collecteur de courant 2. La paroi supérieure de chaque cavité d'expansion 4 est formée par une zone prédéterminée de la seconde face 3b de l'électrode 3, disposée en regard de ladite cavité 4. La zone prédéterminée de la seconde face 3b correspond plus particulièrement à la zone disposée en regard de la cavité 4 correspondante.

À titre d'exemple, le collecteur de courant 2 est formé d'un métal comme le titane, le platine, le nickel ou l'or ou par de l'oxyde d'indium et d'étain (ITO).

La formation des cavités d'expansion 4, dans le collecteur de courant 2, peut être obtenue par tout type de procédé connu et notamment par les procédés classiquement utilisés dans le domaine de la microélectronique. Plus particulièrement, les cavités 4 peuvent être obtenues en déposant, sur un substrat plan, une couche mince par PVD, CVD, dépôt chimique en phase vapeur assisté par plasma (PECVD) ou dépôt par jet d'encre...et en photolithographiant ladite couche mince, à l'aide d'un masque de photolithogravure, depuis la surface libre 2a de la couche mince.

Les cavités d'expansion 4 représentées sur les figures 1 et 2 sont, par exemple, formées en structurant une couche mince sous la forme d'un peigne. Plus particulièrement, des branches 2b sont formées dans ladite couche mince, depuis sa surface 2a. Les branches 2b sont, de préférence parallèles entre elles, perpendiculaires à la surface 2a et d'une hauteur inférieure à l'épaisseur de la couche mince pour qu'elles reposent sur une base 2c. Les cavités d'expansion 4 correspondent, ainsi, aux zones en creux créées dans la couche mince et séparant les branches 2b. Lesdites branches 2b forment alors les parois latérales des cavités d'expansion 4 et les zones libres de la base 2c forment leurs parois inférieures, qui sont avantageusement parallèles aux parois supérieures formées par les zones de l'électrode 3.

À titre d'exemple, le collecteur de courant 2 représenté sur les figures 1 et 2 peut être formé à partir d'une couche mince en titane, de 800 nm d'épaisseur déposée par pulvérisation cathodique en courant continu (dc) sur un substrat plan. Des cavités d'expansion 4 peuvent, alors, être créées dans la couche mince en titane, en formant par pholithogravure les branches 2b d'une hauteur d'environ 600nm et d'une largeur de 500nm et espacées les unes des autres d'une distance de 1000nm. L'espace ainsi libéré entre deux branches adjacentes 2b du collecteur de courant 2 forme une cavité d'expansion 4 pour le matériau de l'électrode 4 lors de l'insertion des cations Li⁺ dans ladite électrode.

Selon une variante de réalisation, le collecteur de courant pourrait également être réalisé par dépôt conforme du collecteur de courant sur un substrat présentant une surface préalablement structurée. Par dépôt conforme d'une couche mince, on entend que la couche déposée a une épaisseur constante quelle que soit la géométrie de la surface sur laquelle elle est déposée. Ainsi, dans le cas d'un dépôt conforme, la couche déposée recouvrira, par exemple, les parois de zones en creux d'une surface et l'épaisseur de la couche sera constante sur l'ensemble de ladite surface. À l'inverse, un dépôt non conforme d'une couche signifie que le matériau déposé sur une surface comportant des zones en creux par rapport à un plan principal ne pénètre pas dans les zones en creux formées dans ladite surface. La couche déposée repose alors sur la totalité du plan principal de ladite surface, de sorte qu'elle comporte des surfaces opposées planes et parallèles.

Une fois le collecteur de courant formé, l'électrode 3 est formée sur la surface libre 2a du collecteur de courant 2, en déposant non conformément une couche mince, par exemple par pulvérisation cathodique.

Par ailleurs, les caractéristiques géométriques du collecteur de courant sont, de préférence, choisies en fonction de l'expansion volumique prévue pour l'électrode. Ainsi, le volume de l'ensemble des cavités d'expansion est préférentiellement supérieur ou égale au volume d'expansion prévu pour l'électrode. Le volume d'expansion prévu pour l'électrode correspond à l'écart de volume occupé par l'électrode, respectivement lorsque des cations Li⁺ sont insérés dans le matériau et lorsqu'ils sont désinsérés. Pour une électrode négative, le volume d'expansion correspond ainsi à l'écart de volume occupé par l'électrode entre une opération de charge et une opération de décharge. L'électrode 3 représentée sur la figure 1 est, par exemple, formée par une couche mince en silicium de 100 nm d'épaisseur déposée par pulvérisation cathodique radiofréquence (rf). Une telle couche conduit à une capacité de l'ordre de 100 µAh/cm² avec une expansion volumique de 300 nm/cm². Pour un accumulateur au lithium d'une surface de 1 cm², le volume d'expansion d'une telle électrode 3 est de l'ordre de 3.10⁻⁵ cm³. Pour cet exemple, la largeur des cavités 4 est égale à deux fois la largeur des branches 2b. Ainsi, les cavités d'expansion délimiteront un volume global au moins égal à au volume d'expansion de l'électrode.

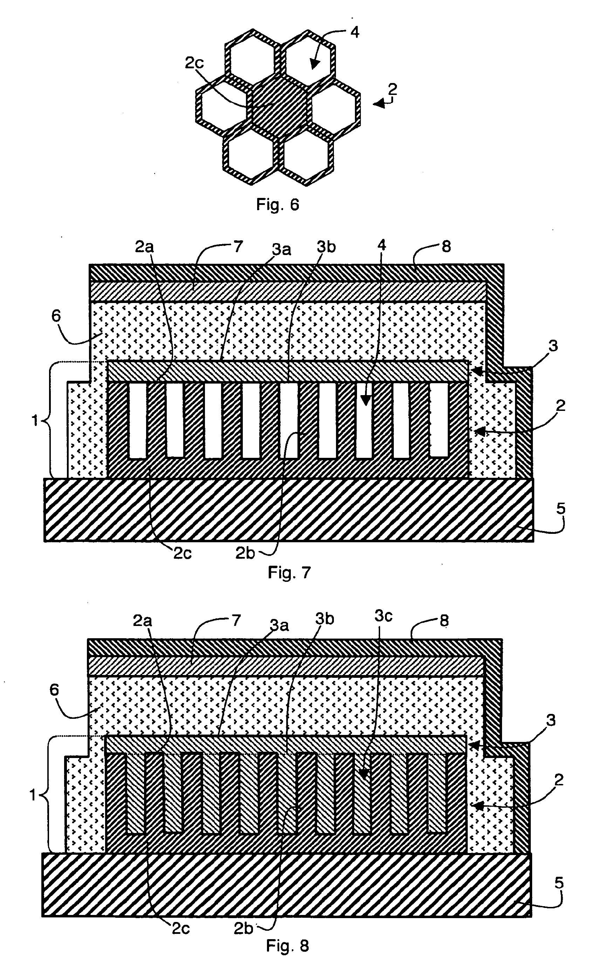

Sur les figures 1 et 2, les cavités d'expansion 4 sont de section rectangulaire. Cependant, elles peuvent être de tout type de forme. Les figures 3 à 6 illustrent, à titre d'exemple, des variantes de réalisation du collecteur de courant 2 représenté sur les figures 1 et 2. Sur la figure 3, le collecteur de courant est structuré sous forme de plots 2d de section circulaire. Dans ce cas, les cavités d'expansion 4 ne sont pas, contrairement à celles représentées sur les figures 1 et 2, délimitées par des parois latérales continues. Les cavités d'expansion 4 sont délimitées par les espaces entre les plots 2d et elles communiquent les unes avec les autres pour former un volume global d'expansion. De plus, la section des plots 2d peut être de tout type, par exemple carrée, octogonale...Sur la figure 4, la structuration du collecteur de courant 2 permet de former un réseau de cavités d'expansion 4 de section carrée, réparties régulièrement selon une matrice comprenant une pluralité de lignes et une pluralité de colonnes. Sur les figures 5 et 6, les cavités d'expansion 4 sont de section hexagonale et elles forment un réseau d'alvéoles communément appelé nid d'abeille. Sept cavités adjacentes sont représentées sur la figure 5 tandis que la figure 6 représente six cavités 4 réparties uniformément autour d'un pilier central 2e de section hexagonale.

À titre d'illustration, les figures 7 et 8 représentent l'utilisation de l'empilement 1 représenté sur les figures 1 et 2 en tant qu'empilement anodique dans un accumulateur au lithium sous forme de films minces, respectivement en décharge et en charge. L'empilement 1 est disposé sur une surface supérieure isolante d'un substrat 5. Le substrat 5 est, par exemple, formé par un support en silicium recouvert par une ou plusieurs couches de passivation, par exemple en SiO₂ et/ou en Si₃N₄ ou par une couche en céramique ou en polymère. Un électrolyte 6 constitué par une membrane électrolytique solide, une électrode positive 7 et un collecteur de courant positif 8 sont ensuite successivement déposés sous forme de couches minces sur l'empilement 1 et l'accumulateur ainsi formé peut être encapsulé (non représenté). Les matériaux utilisés pour former l'électrolyte 6, l'électrode positive 7 et le collecteur de courant positif 8 peuvent être de tout type connu. Par exemple, l'électrolyte peut être en LiPON, l'électrode positive peut être en LiCoO₂ et le collecteur de courant positif peut être en aluminium.

Lors de la fabrication de l'accumulateur ou à la fin d'une opération de décharge, les cavités d'expansion 4 sont vides alors que pendant une opération de charge, c'est-à-dire pendant l'insertion des cations Li⁺ dans le matériau de l'électrode négative 3, le volume de celle-ci augmente et le surcroît de matériau vient progressivement occuper au moins une partie des cavités d'expansion 4.

Sur la figure 8, les cavités d'expansion 4 sont totalement remplies par le matériau d'électrode 3. L'électrode 3 se compose alors de la couche mince initialement déposée munie d'une face 3b plane, en contact avec le sommet des branches 2b du collecteur de courant 2 et prolongée par une pluralité d'éléments 3c en saillie, sensiblement perpendiculaires au plan de ladite face 3b et logés dans les cavités d'expansion 4. Dans des variantes de réalisation, les cavités d'expansion 4 peuvent être occupées seulement partiellement par le matériau d'électrode, à la fin d'une opération de charge. Ainsi, la présence des cavités d'expansion dans l'ensemble collecteur de courant-électrode permet donc audit ensemble de conserver un volume extérieur constant pendant la mise en oeuvre de l'accumulateur, ce qui limite les contraintes sur l'électrolyte 6 et réduit les risques de courts-circuits.

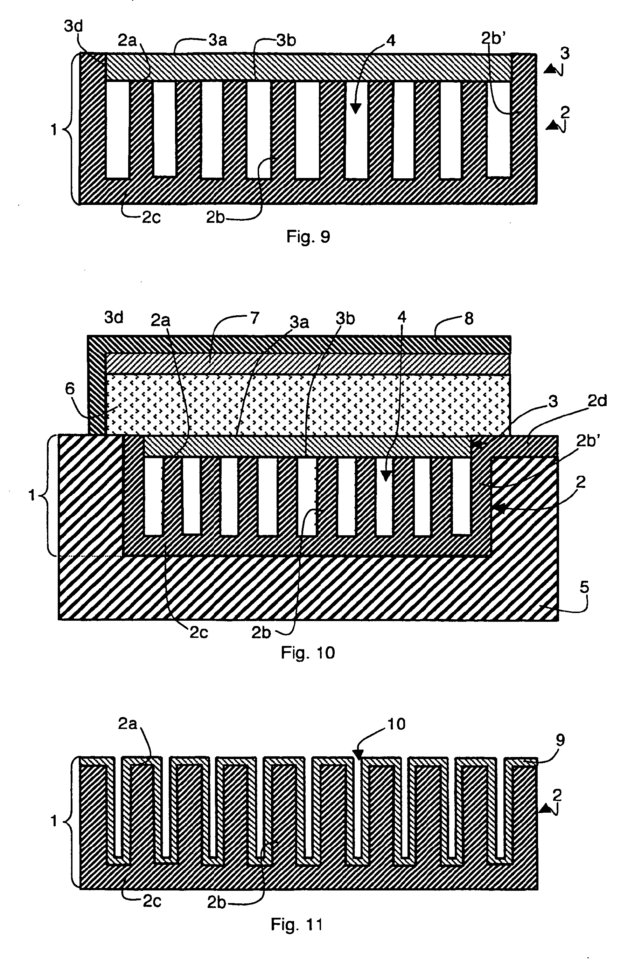

Dans le mode de réalisation représenté sur la figure 9, le collecteur de courant 2 est également sous la forme d'un peigne. Par contre, il comporte deux branches externes 2b', formant dans le collecteur de courant 2 des parois latérales supplémentaires externes, d'une hauteur supérieure à celle des autres branches 2b du collecteur de courant. De plus, la différence de hauteur entre les branches 2b et les branches externes 2b' correspond sensiblement à l'épaisseur de l'électrode 3. Enfin, les parois latérales ou flancs 3d de l'électrode 3 sont en contact direct avec les branches externes 2b' et les sommets respectifs desdites branches externes 2b' sont dans le même plan que la face 3a de l'électrode.

Un tel mode de réalisation permet de limiter plus encore les contraintes provoquées sur l'électrolyte 6, puisqu'il évite aux parois 3d de l'électrode 3 d'être en contact avec l'électrolyte. Dans ce mode de réalisation, seule la face 3c de l'électrode reste en contact avec l'électrolyte 6. Par ailleurs, les contraintes exercées sur l'électrolyte peuvent encore être diminuées en réalisant un électrolyte sous forme d'une couche mince d'épaisseur constante et comportant des faces opposées planes et notamment la face destinée à être en contact avec l'électrode. Pour cela, et comme représenté sur la figure 10, un ensemble 1 tel que celui représenté sur la figure 9 peut être emboîté dans le substrat 5. Ainsi, le substrat comporte une ouverture de forme complémentaire à celle dudit ensemble 1 pour recevoir ledit ensemble 1. La face 3a de l'électrode, le sommet des branches externes 2b' et la face libre du substrat 5 sont, alors, dans un même plan et l'électrolyte 6 peut être déposé sous la forme d'une couche mince avec une face plane venant en contact avec l'électrode 3, le collecteur de courant 2 et le substrat 5. Comme représenté sur la figure 10, une des branches externes 2b' du collecteur de courant 2 est, de préférence, prolongée à son extrémité par un élément 2d. L'élément 2d est sensiblement perpendiculaire au reste de ladite branche 2b' et il est destiné à venir en contact avec la face libre du substrat 5 pour former un contact électrique. Dans ce cas, le substrat 5 est légèrement gravé sur une profondeur égale à l'épaisseur de l'élément 2d, pour permettre le dépôt de l'électrolyte sous forme d'une couche mince sans marche.

Selon l'invention, au lieu d'être formées par les zones en creux du collecteur de courant, les cavités d'expansion peuvent également être délimitées par l'électrode.

Ainsi, selon un second mode de réalisation représenté sur la figure 11, l'ensemble 1 peut être formé d'un collecteur de courant 2 comportant une surface 2a munie d'une pluralité de zones en creux et d'une électrode formée par une couche mince continue 9 obtenue par dépôt conforme sur ladite surface 2a du collecteur 2. Ainsi, la couche mince 9 est déposée sur la totalité de la surface 2a du collecteur. Ainsi, elle recouvre la totalité des parois du collecteur de courant délimitant les zones en creux ainsi que les extrémités libres des parois latérales 2b. Ainsi, les cavités d'expansion 10 sont formées, dans les zones en creux du collecteur de courant par la partie de la couche mince continue 9 recouvrant les parois desdites zones. Dans ce cas, les cavités d'expansion 10 sont ouvertes, elles ne comportent pas de parois supérieures. Plus particulièrement, l'épaisseur de la couche mince continue 9 est choisie, afin d'autoriser un espace libre entre les deux parties de la couche mince 9 disposées en regard dans une zone en creux, ledit espace formant une cavité d'expansion.

Sur la figure 11, la structure du collecteur de courant 2 est identique à celle du collecteur de courant représenté sur la figure 1. Elle est sous la forme d'un peigne et les zones en creux sont délimitées par les espaces entre les branches 2b du collecteur de courant 2. La structure du collecteur de courant 2 n'est pas limitée au mode de réalisation représenté sur la figure 11. La pluralité de zones en creux peut, cependant, former un réseau de tout type de forme (nid d'abeille, carré, parallélogramme...).

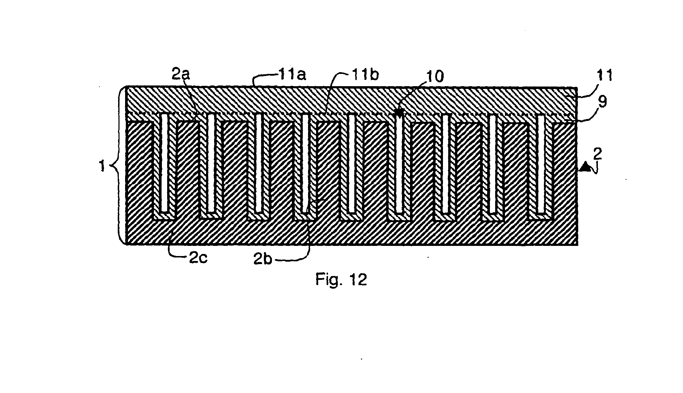

Pour améliorer la surface de contact entre l'électrolyte et l'électrode et, comme représenté sur la figure 12, une couche mince supplémentaire 11 en matériau d'électrode, d'épaisseur constante et comportant des faces opposées 11a et 11b planes, peut être disposée sur la couche mince continue 9. La couche mince supplémentaire 11 permet, ainsi, d'obtenir des cavités d'expansion 10 fermées disposées à l'intérieur de l'électrode constituée par les couches minces, respectivement conforme 9 et supplémentaire 11. En effet, les zones de la face 11 b de la couche supplémentaire 11, disposées en regard des cavités d'expansion 10, forment leurs parois supérieures. La couche supplémentaire 11 est formée, par dépôt non conforme d'un matériau d'électrode, sur la couche mince 9 déposée initialement par dépôt conforme sur la surface 2a du collecteur de courant. Ainsi, lors du dépôt non conforme, le matériau d'électrode de la couche supplémentaire 11 n'est pas introduit dans les cavités d'expansion.

Le matériau d'électrode de la couche supplémentaire 11 peut être identique à celui déposé pour former, par dépôt conforme, la couche mince 9. À titre d'exemple, la couche supplémentaire 11 est obtenue en déposant du silicium par PVD tandis que la couche mince 9 déposée préalablement sur la surface 2a du collecteur de courant peut être obtenue en déposant du silicium par CVD. Cependant, les matériaux respectifs des couches minces 9 et 11 peuvent être différents, par exemple pour optimiser la conformité de la couche mince 9 et/ou l'interface entre la couche supplémentaire 11 et l'électrolyte. Par exemple, la couche mince 9 est en silicium et la couche mince 11 est en graphite ou bien les deux couches 9 et 11 peuvent être formées dans un même matériau (par exemple SiₓGe_{y}) mais avec deux compositions différentes (par exemple des valeurs de x et de y différentes pour les deux compositions de SiₓGe_{y}).

Un ensemble selon l'un des modes de réalisation ci-dessus présente l'avantage de pouvoir conserver un volume externe constant, ce qui réduit les contraintes exercées sur l'électrolyte d'un accumulateur au lithium sous forme de films minces et réduit les risques de courts-circuits. De plus, l'ensemble est facile à mettre en oeuvre, les techniques utilisées étant des techniques compatibles avec les procédés industriels utilisés dans le domaine de la microélectronique. Cela facilite l'intégration des accumulateurs au lithium comportant un tel ensemble pour fournir l'énergie nécessaire à des microsystèmes ou microcomposants électroniques tels que les cartes à puces, les étiquettes intelligentes, les horloges internes... Ces applications imposent, en effet, que toutes les couches minces nécessaires au fonctionnement de l'accumulateur au lithium soient fabriquées avec des techniques compatibles avec les procédés industriels de la microélectronique.

L'invention n'est pas limitée aux modes de réalisation décrits ci-dessus. Plus particulièrement, l'électrode peut être une électrode positive si le volume du matériau de ladite électrode augmente lors de l'insertion des cations Li⁺.

## Revendications

1. Accumulateur au lithium comportant au moins un électrolyte (6) et un empilement (1) comprenant une électrode, un collecteur de courant (2), comprenant une pluralité de zones en creux délimitées par des parois latérales comportant chacune une extrémité libre, des cavités d'expansion pour l'électrode étant formées dans les zones en creux,
accumulateur **caractérisé en ce que** :
- l'électrode comporte au moins une couche mince continue recouvrant l'extrémité libre des parois latérales du collecteur de courant,
- l'électrolyte est constitué par une membrane électrolytique sous forme d'une couche mince solide disposée sur ledit empilement,
- chaque cavité d'expansion, formée dans une zone en creux, comporte au moins une paroi formée par la couche mince continue de l'électrode.

2. Accumulateur selon la revendication 1, **caractérisé en ce que** la couche mince continue (3) constituant l'électrode comporte des première et seconde faces opposées (3a, 3b), planes, parallèles et respectivement en contact avec la membrane électrolytique (6) et les extrémités libres des parois latérales du collecteur de courant.

3. Accumulateur selon la revendication 2, **caractérisé en ce que** le collecteur de courant comporte des parois latérales supplémentaires externes (2b') ayant une hauteur supérieure à celle des parois latérales, la différence de hauteur entre les parois latérales et les parois latérales supplémentaires externes correspond à l'épaisseur de la couche mince continue (3).

4. Accumulateur selon la revendication 3, **caractérisé en ce que** la couche mince continue comporte des flancs en contact avec les parois latérales supplémentaires externes.

5. Accumulateur selon la revendication 1, **caractérisé en ce que** la totalité des parois latérales (2b) du collecteur de courant est recouverte par la couche mince continue (9).

6. Accumulateur selon la revendication 5, **caractérisé en ce que** l'électrode comporte une couche mince supplémentaire (11), comportant des faces opposées (11 a, 11 b) planes et parallèles et disposée sur la couche mince continue (9), une des faces (11b) de la couche mince supplémentaire (11) délimitant avec la couche mince continue (9) les cavités d'expansion (10).

7. Accumulateur selon l'une quelconque des revendications 1 à 6, **caractérisé en ce que** l'électrode (3) est une électrode négative.

8. Accumulateur selon l'une quelconque des revendications 1 à 7, **caractérisé en ce que** l'électrode (3) est constituée par un matériau apte à insérer et désinsérer des cations Li⁺ et présentant une expansion volumique lors de l'insertion de cations Li⁺.

9. Accumulateur selon la revendication 8, **caractérisé en ce que** ledit matériau est choisi parmi le silicium, l'aluminium, le germanium, l'étain et leurs composés.

10. Accumulateur selon l'une quelconque des revendications 1 à 9, **caractérisé en ce que** le collecteur de courant (2) est constitué par une couche mince structurée sous la forme d'un peigne ou sous la forme de plots de section circulaire, carrée ou octogonale.

11. Accumulateur selon l'une quelconque des revendications 1 à 10, **caractérisé en ce que** les cavités d'expansion (4) sont de section rectangulaire ou hexagonale.

12. Accumulateur selon la revendication 11, **caractérisé en ce que** les cavités d'expansion (4) étant de section hexagonale, elles forment un réseau d'alvéoles en nid d'abeille.

13. Procédé de fabrication d'un accumulateur au lithium selon l'une quelconque des revendications 1 à 12, **caractérisé en ce qu'**il comporte les étapes successives suivantes :
a) formation d'un collecteur de courant (2), comprenant une pluralité de zones en creux délimitées par des parois latérales comportant chacune une extrémité libre,
b) formation d'une électrode, comportant au moins une couche mince continue recouvrant l'extrémité libre des parois latérales du collecteur de courant, et formation de cavités d'expansion pour l'électrode, chacune étant formée dans une zone en creux et comportant au moins une paroi formée par la couche mince continue de l'électrode
c) et formation d'un électrolyte constitué par une membrane électrolytique sous forme d'une couche mince solide disposée sur ledit empilement.

14. Procédé selon la revendication 13, **caractérisé en ce que** l'étape b) comporte la formation par dépôt non conforme de la couche mince continue (3) constituant l'électrode, sur les extrémités libres des parois latérales du collecteur de courant (2).

15. Procédé selon la revendication 14, **caractérisé en ce que** l'étape b) comporte la formation par dépôt conforme de la couche mince continue (9), sur la totalité des parois latérales du collecteur de courant (2) et des extrémités libres desdites parois.

16. Procédé selon la revendication 15, **caractérisé en ce que** la formation de la couche mince continue (9) est suivie par un dépôt non-conforme d'une couche mince supplémentaire (11), sur ladite couche mince continue (9).

## Claims

1. A lithium storage battery comprising at least an electrolyte (6) and a stack (1) comprising an electrode, a current collector (2) comprising a plurality of recessed zones delineated by side walls each comprising a free end, expansion cavities for the electrode being formed by the recessed zones,
storage battery **characterized in that**:
- the electrode comprises at least a continuous thin layer covering the free end of the side walls of the current collector,
- the electrolyte is formed by an electrolytic membrane in the form of a solid thin layer deposited on said stack,
- each expansion cavity is formed in a recessed zone and comprises at least a wall formed by the continuous thin layer of the electrode.

2. The storage battery according to claim 1, **characterized in that** the continuous thin layer (3) forming the electrode comprises opposite first and second flat and parallel surfaces (3a, 3b) respectively in contact with the electrolytic membrane (6) and the free ends of the side walls of the current collector.

3. The storage battery according to claim 2, **characterized in that** the current collector comprises external additional side walls (2b') having a larger height than that of the side walls, the difference in height between the side walls and the external additional side walls corresponding to the thickness of the continuous thin layer (3).

4. The storage battery according to claim 3, **characterized in that** the continuous thin layer comprises flanks in contact with the external additional side walls.

5. The storage battery according to claim 1, **characterized in that** the whole of the side walls (2b) of the current collector is covered by the continuous thin layer (9).

6. The storage battery according to claim 5, **characterized in that** the electrode comprises an additional thin layer (11) comprising flat and parallel opposite surfaces (11 a, 11 b) and arranged on the continuous thin layer (9), one of the surfaces (11b) of the additional thin layer (11) delineating the expansion cavities (10) with the continuous thin layer (9).

7. The storage battery according to any one of claims 1 to 6, **characterized in that** the electrode (3) is a negative electrode.

8. The storage battery according to any one of claims 1 to 7, **characterized in that** the electrode (3) is formed by a material able to insert and de-insert Li⁺ cations and presenting a volumic expansion when insertion of Li⁺ cations is performed.

9. The storage battery according to claim 8, **characterized in that** said material is chosen from silicon, aluminium, germanium, tin and compounds thereof.

10. The storage battery according to any one of claims 1 to 9, **characterized in that** the current collector (2) is formed by a patterned thin layer in the form of a comb or in the form of pads of circular, square or octagonal cross-section.

11. The storage battery according to any one of claims 1 to 10, **characterized in that** the expansion cavities (4) are of rectangular or hexagonal cross-section.

12. The storage battery according to claim 11, **characterized in that** the expansion cavities (4) being of hexagonal cross-section, they form a honeycombed network of recesses.

13. A method for producing a lithium storage battery according to any one of claims 1 to 12, **characterized in that** it comprises the following successive steps:
a) formation of a current collector (2) comprising a plurality of recessed zones delineated by side walls each comprising a free end,
b) formation of an electrode comprising at least a continuous thin layer covering the free end of the side walls of the current collector, and formation of expansion cavities for the electrode, each being formed in a recessed zone and comprising at least one wall formed by the continuous thin layer of the electrode
c) and formation of an electrolyte formed by an electrolytic membrane in the form of a solid thin layer deposited on said stack.

14. The method according to claim 13, **characterized in that** step b) comprises formation by non-conformal deposition of the continuous thin layer (3) forming the electrode on the free end of the side walls of the current collector (2).

15. The method according to claim 14, **characterized in that** step b) comprises formation by conformal deposition of the continuous thin layer (9) on the whole of the side walls of the current collector (2) and of the free ends of said walls.

16. The method according to claim 15, **characterized in that** formation of the continuous thin layer (9) is followed by non-conformal deposition of an additional thin layer (11) on said continuous thin layer (9).

## Patentansprüche

1. Lithium-Akkumulator, der mindestens einen Elektrolyten (6) und eine Aufschichtung (1) umfasst, die eine Elektrode, einen Stromkollektor (2) umfasst, der mehrere vertiefte Bereiche aufweist, die von Seitenwänden begrenzt sind, die jeweils ein freies Ende umfassen, wobei Expansionsräume für die Elektrode in den vertieften Bereichen gebildet sind,
Akkumulator, der **dadurch gekennzeichnet ist, dass**
- die Elektrode mindestens eine durchgehende Dünnschicht aufweist, die das freie Ende der Seitenwände des Stromkollektors bedeckt,
- der Elektrolyt von einer elektrolytischen Membran in Form einer festen Dünnschicht gebildet wird, die auf der genannten Aufschichtung angeordnet ist,
- jeder Expansionsraum, der in einem vertieften Bereich gebildet ist, mindestens eine Wand umfasst, die von der durchgehenden Dünnschicht der Elektrode gebildet wird.

2. Akkumulator nach Anspruch 1, **dadurch gekennzeichnet, dass** die durchgehende Dünnschicht (3), welche die Elektrode bildet, eine erste und eine zweite Seite (3a, 3b) umfasst, die einander gegenüberliegen, flach, parallel und jeweils in Kontakt mit der elektrolytischen Membran (6) und den freien Enden der Seitenwände des Stromkollektors sind.

3. Akkumulator nach Anspruch 2, **dadurch gekennzeichnet, dass** der Stromkollektor zusätzliche äußere Seitenwände (2b') umfasst, die höher sind als die Seitenwände, wobei der Höhenunterschied zwischen den Seitenwänden und den zusätzlichen äußeren Seitenwänden der Dicke der durchgehenden Dünnschicht (3) entspricht.

4. Akkumulator nach Anspruch 3, **dadurch gekennzeichnet, dass** die durchgehende Dünnschicht Seitenflächen umfasst, die in Kontakt mit den zusätzlichen äußeren Seitenwänden sind.

5. Akkumulator nach Anspruch 1, **dadurch gekennzeichnet, dass** alle Seitenwände (2b) des Stromkollektors von der durchgehenden Dünnschicht (9) bedeckt sind.

6. Akkumulator nach Anspruch 5, **dadurch gekennzeichnet, dass** die Elektrode eine zusätzliche Dünnschicht (11) mit einander gegenüberliegenden, flachen und parallelen Seiten (11a, 11b) umfasst, die auf der durchgehenden Dünnschicht (9) vorgesehen ist, wobei eine der Seiten (11 b) der zusätzlichen Dünnschicht (11) mit der durchgehenden Dünnschicht (9) die Expansionsräume (10) begrenzt.

7. Akkumulator nach einem der Ansprüche 1 bis 6, **dadurch gekennzeichnet, dass** die Elektrode (3) eine negative Elektrode ist.

8. Akkumulator nach einem der Ansprüche 1 bis 7, **dadurch gekennzeichnet, dass** die Elektrode (3) von einem Material gebildet wird, das geeignet ist, Li⁺-Kationen aufzunehmen und abzuscheiden, und sich während der Aufnahme der Li⁺-Kationen volumenmäßig ausdehnt.

9. Akkumulator nach Anspruch 8, **dadurch gekennzeichnet, dass** das genannte Material aus Silizium, Aluminium, Germanium, Zinn und deren Verbindungen ausgewählt ist.

10. Akkumulator nach einem der Ansprüche 1 bis 9, **dadurch gekennzeichnet, dass** der Stromkollektor (2) von einer Dünnschicht gebildet wird, die kammförmig oder in Form von Bumps mit kreisförmigem, viereckigem oder achteckigem Querschnitt strukturiert ist.

11. Akkumulator nach einem der Ansprüche 1 bis 10, **dadurch gekennzeichnet, dass** die Expansionsräume (4) einen rechteckigen oder sechseckigen Querschnitt haben.

12. Akkumulator nach Anspruch 11, **dadurch gekennzeichnet, dass**, wenn die Expansionsräume (4) sechseckig sind, sie ein bienenwabenförmiges Netz bilden.

13. Herstellungsverfahren für einen Akkumulator nach einem der Ansprüche 1 bis 12, **dadurch gekennzeichnet, dass** es die folgenden aufeinanderfolgenden Schritte umfasst:
a) Bildung eines Stromkollektors (2), der eine Mehrzahl vertiefter Bereiche aufweist, die von Seitenwänden begrenzt sind, die ein freies Ende aufweisen,
b) Bildung einer Elektrode, die mindestens eine durchgehende Dünnschicht umfasst, die das freie Ende der Seitenwände des Stromkollektors bedeckt, und Bildung von Expansionsräumen für die Elektrode, wobei jeder in einem vertieften Bereich ausgebildet ist und mindestens eine Wand umfasst, die von der durchgehenden Dünnschicht der Elektrode gebildet ist,
c) und Herstellung eines Elektrolyten, der von einer elektrolytischen Membran in Form einer festen Dünnschicht gebildet wird, die auf der genannten Aufschichtung angeordnet ist,

14. Verfahren nach Anspruch 13, **dadurch gekennzeichnet, dass** Schritt b) die Bildung der die Elektrode bildenden, durchgehenden Dünnschicht (3) durch unregelmäßiges Aufbringen auf den freien Enden der Seitenwände des Stromkollektors (2) umfasst.

15. Verfahren nach Anspruch 14, **dadurch gekennzeichnet, dass** Schritt b) die Bildung der durchgehenden Dünnschicht durch (9) regelmäßiges Aufbringen auf sämtlichen Seitenwänden des Stromkollektors (2) und freien Enden der genannten Wände umfasst.

16. Verfahren nach Anspruch 15, **dadurch gekennzeichnet, dass** die Bildung der durchgehenden Dünnschicht (9) gefolgt ist von einem unregelmäßigen Aufbringen einer zusätzlichen Dünnschicht (11) auf die durchgehende Dünnschicht (9).
